(19)

Europäisches
Patentamt
European
Patent Office
Office européen
des brevets

(11) **EP 3 536 990 B1**

(12) **EUROPEAN PATENT SPECIFICATION**

(45) Date of publication and mention
of the grant of the patent:
**04.08.2021  Bulletin 2021/31**

(51) Int Cl.:
**B25B 13/48** *(2006.01)*      **B25B 15/00** *(2006.01)*

(21) Application number: **19160949.4**

(22) Date of filing: **06.03.2019**

(54) **THREADED WOODEN PLUG FOR FASTENING TOGETHER WOODEN ELEMENTS, METHOD FOR INSERTING THE PLUG INTO WOODEN ELEMENTS AND TOOL FOR INSERTING THE PLUG**

HOLZDÜBEL MIT GEWINDE ZUM VERBINDEN VON HOLZELEMENTEN, VERFAHREN ZUM EINSETZEN DES DÜBELS IN HOLZELEMENTE UND WERKZEUG ZUM EINSETZEN DES HOLZDÜBELS

BOUCHON EN BOIS FILETÉ POUR FIXER DES ÉLÉMENTS EN BOIS, PROCÉDÉ PERMETTANT D'INSÉRER LEDIT BOUCHON DANS DES ÉLÉMENTS EN BOIS ET OUTIL POUR INSÉRER LE BOUCHON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.03.2018  IT 201800003298**

(43) Date of publication of application:
**11.09.2019  Bulletin 2019/37**

(73) Proprietor: **Leneco S.r.l.**
**39100 Bolzano (BZ) (IT)**

(72) Inventors:
  • **HOFER, Paulpeter**
    **39100 BOLZANO (IT)**
  • **PARIS, Gerhard Josef**
    **39100 BOLZANO (IT)**

  • **ERLACHER, Andreas**
    **39100 BOLZANO (IT)**
  • **TRIENBACHER, Roman**
    **39100 BOLZANO (IT)**
  • **GUFLER, Christian**
    **39100 BOLZANO (IT)**

(74) Representative: **Stucovitz, Alessandro et al**
    **Dott. Ing. Prof. Alfredo Raimondi S.r.l.**
    **Piazzale Luigi Cadorna, 15**
    **20123 Milano (IT)**

(56) References cited:
    **EP-A1- 2 279 839          EP-A1- 2 407 265**
    **DE-A1-102010 031 525     GB-A- 1 131 423**
    **US-B1- 9 683 593**

EP 3 536 990 B1

## Description

The present invention relates to a threaded wooden plug for fastening together wooden elements, a panel with wooden elements coupled by means of such a plug and a method for inserting the plug.

It is known in the technical sector relating to the joining together of wooden elements such as panels and boards, for example in order to form wooden walls, that there exists the need to fasten together said elements using mechanical means such as screws, pins or the like, or using glues.

Generally speaking, the known connection means pose problems of an ecological nature such as those arising from the use of glues which emit harmful vapours during production and application, or the problems associated with the disposal and recycling of the various components of the metallic mechanical means.

In greater detail, self-tapping metal screws are also known where further problems arise during the machining of the wooden elements which, once joined together, cannot be machined with wood saws owing to the presence of the metal screws, therefore resulting in the need to pre-form the wooden elements before assembly without the further possibility of modification.

In order to overcome the problems of metal screws, wooden screws have also been proposed, as described for example in EP 2,279,839 and EP 2,407,265 in the name of Rombach; these known wooden screws have a number of drawbacks which make them impractical to use since they require the preparation of a hole in the wooden panel with the formation of a female thread suitable for engagement with the corresponding threading of the screw; in addition, the known screws have a so-called short pitch, which is not suitable for the production of sufficiently long screws as required by specific applications for the formation of wooden construction elements, for example walls, consisting of a plurality of stacked wooden boards or panels ("Brettstapel"); for these applications, the length of the screw defines the possible maximum width/thickness of the construction element which, in general, often must be at least 1.5 m. In addition, the known screws have an operating head which, once the screw has been inserted, remains outside the panel, making it necessary to perform delicate trimming operations in order to restore the flatness of the panel surface.

Also known are connection elements consisting of a threadless wooden plug, normally called "pin", with an outer diameter substantially corresponding to the inner diameter of a hole provided in the panel; following insertion, performed merely by means of an axial pushing force, the plug absorbs moisture, expanding, and therefore grips merely by means of friction without the need for glues.

The main defect of these plugs consists precisely in their dependence on the surrounding humidity which, since it varies, may cause loosening of the contact between plug and wood, further reducing the resistance to tensile forces, said resistance being in any case limited even in ideal conditions. In addition, in order to ensure an acceptable grip, the pin must be inserted inside a hole with a diameter substantially corresponding to that of the pin, this resulting in the need to apply a high axial pushing force during insertion in order to overcome the relative friction, this being generally able to be achieved only with pneumatic tools or the like.

DE 10 2010 031 525 describes a wooden plug with a cylindrical body which has a threading formed over part of its outer side surface, in particular on the insertion tip and in some cases on the head of the plug. The document teaches using a threading with a preferably very short or at the most medium-size pitch, but one which is always much smaller than the diameter of the plug, and with a substantially trapezoidal form of the thread profile, with flat crests and concave troughs between adjacent threads.

With the plug described in DE 10 2010 031525, the threading allows at least part of the axial pushing force needed for insertion to be replaced with a screwing force. However, the short pitch has the effect that, in order to insert the threaded part, a large number of screwing turns are required, which is time-consuming and results in wear of the threads. Moreover, the short pitch and the flat form of the profile of the threading do not have practically any biting action on the wood of the hole wall, requiring a large screwing force for insertion.

Therefore, with an increase in the length of the plug, the threading may be formed only along very short sections of the plug, in particular only on the tip and the head.

Once inserted, the plug according to DE 10 2010 031525 operates in a manner similar to that of the known threadless pins. There is no significant improvement in the resistance to tensile forces since the form of the threading does not have practically any biting action on the internal surface of the hole and therefore there is no real advantage from the point of view of the connection strength.

A further drawback is that the length of the plugs is limited, in particular the document teaches that even with only one thread on the tip and on the head of the plug, the plug may not have a length of more than 1 m - at the most 1.5 m - or an insertion depth of more than 60 cm. Moreover, with an increase in the length of the plug, the hole may no longer have a diameter corresponding to that of the plug, but must have instead a narrower part into which the threaded tip of the plug is screwed, this having a negative effect on the connection strength.

The technical problem which is posed therefore is that of providing a wooden connecting plug which solves, or at least reduces, the problems of the prior art, resulting in faster use and a more reliable gripping action on the parts to be joined together, with optimum tensile strength properties.

In connection with this problem it is also required that the plug should be easy and inexpensive to produce and assemble. A particular aim of the present invention is to provide a plug which, compared to the plug described in DE 10 2010 031525, may be more easily mounted (inserted) while maintaining the same connection strength, or, for the same ease of insertion, offers an improved connection strength and/or allows the joining together of panels of greater thickness/width.

These results are obtained according to the present invention by a threaded wooden plug according to the characteristic features of Claim 1.

A further desirable object is to provide a tool which facilitates the insertion of the wooden plugs according to the invention. This result is achieved with a tool according to Claim 12.

The Applicant has surprisingly discovered that, differently from the teaching of DE 10 2010 031525, a plug which has a cylindrical or frustoconical body with a threaded outer side surface, in which the threading has a long pitch comprised between 30% and 300% of - and preferably greater than or equal to - the outer diameter of the cylindrical or frustoconical body, and such that the bottom surface of the threading comprised between opposite flanks of the adjacent threads is formed by the said (circumferential) side surface of the cylindrical or frustoconical body and occupies most of the threaded surface (so that in particular the threads occupy only a small part of the outer surface of the plug), results in much easier insertion into a hole of panels to be joined together, having a hole diameter similar to the diameter of the plug, allowing in particular the force needed to insert the plug to be reduced considerably, whereby said force may be an axial pushing force and/or screwing action; on the other hand, for the same force needed for insertion a much better connection strength may be obtained. With this configuration, in particular in combination with a tool according to the present invention, it is also possible to produce plugs which are up to 3 metres long and which do not break during insertion which may be performed by means of pushing and/or screwing. Without being tied to any particular theory, it is considered that this is due to the small volume of material which must be removed from the hole, by means of cutting with the threads, in order to cause the plug to advance during screwing; once the plug has been inserted, the grip is ensured by the flanks of the threads which are engaged in the material of the hole. In this connection a substantially triangular form of the profile of the threads, with a crest designed to bite into the wood of the hole, is particularly preferred.

The axial pushing and/or screwing force needed for insertion of the plug may be applied in an optimum manner and without damaging the plug, using a tool with an operating head having, in use, a complementary form situated axially opposite an operating head of the plug and provided with a thread inside the head designed to bite into the head of the plug, being stably engaged therewith by means of screwing with a self-tapping action. Such a tool allows an improved twisting/rotational force to be transmitted and the plug to be axially pushed, thereby allowing the two different insertion techniques to be combined as required. The tool may also be easily disengaged from the plug.

By means of the combination of the tool and the plug with long pitch and particular threaded surface it is therefore possible to achieve the maximum ease of insertion together with an improved grip.

When the form of the operating heads of the plug and the tool is frustoconical, this allows also optimum concealed insertion of the plug inside the panels to be joined together. The joining together of plug and tool improves with the increase of the screwing force applied and is optimized by the presence of the complementary frustoconical forms of the plug and tool. Another tool of the prior art is disclosed in US9683593 B1.

The invention relates furthermore to a method for joining together wooden elements by means of a plug according to the invention and a set of wooden elements joined together by this plug.

Further details may be obtained from the following description of non-limiting examples of embodiment of the subject of the present invention, provided with reference to the accompanying drawings, in which:

Figure 1: is a view of the profile of a first embodiment of the threaded plug according to the present invention;

Figure 2: is a partial side view of a plug according to the diagram of Fig. 1;

Figure 3: is a cross-section through the plug according to Fig. 2;

Figure 4: is a partial side view of a further variation of embodiment of a plug according to the diagram of Fig. 1;

Figure 5: is a cross-section through the plug according to Fig. 4;

Figure 6: is a side view of a second embodiment of the threaded plug according to the present invention;

Figure 7: is a cross-section through the plug according to Fig. 6;

Figure 8: is a side view of a third embodiment of the threaded plug according to the present invention;

Figure 9: is a cross-section through the plug according to Fig. 8;

Figure 10: is a detailed side view of the conical head of the plug according to the invention and the head of a tool for operating it;

Figure 11: is a side view of the plug and tool assembly according to the Fig. 10;

Figure 12: is a side view of insertion of the plug by means of a first embodiment of the operating tool;

Figure 13: is a side view of insertion of the plug by means of a second embodiment of the operating tool; and

Figure 14: is a side view of the panel once insertion has been completed.

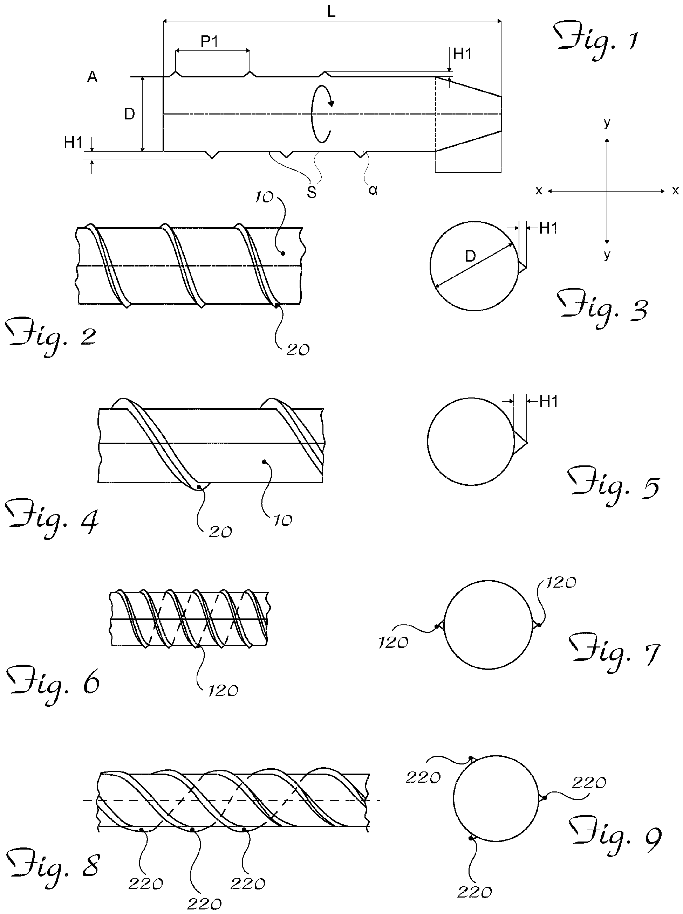

As shown in Fig. 1 and assuming solely for easier description and without a limiting meaning a pair of reference axes in a longitudinal/axial lengthwise direction X-X and transverse/radial widthwise direction Y-Y of the plug, as well as a front part "A" corresponding to the tip designed to be inserted first of all into a hole in the panels to be joined together and a rear part "P" corresponding to the operating head for engagement with an operating tool, the plug according to the invention comprises essentially:

- a substantially cylindrical body 10 with a larger dimension L extending along the longitudinal direction X-X and smaller dimension, along the transverse direction Y-Y, coinciding in the examples of figures with the diameter D of the plug body.

The plug is obtained from wood with a relative density >600kg/m$^3$, preferably hardwood, for example beech wood, which results in a high hardness and therefore high resistance of the plug to pressure, twisting, bending, traction and cutting. The hardness of the wood also results in an improved capacity of the threading to bite into the wood of the hole.

The body of the plug preferably has an external diameter D of between 10 mm and 40 mm, and preferably between 15 mm and 25 mm.

For the purposes of the present invention the standard definition of moisture of the wood is considered as being the percentage ratio between the weight of the water contained in a portion of wood and its anhydrous weight:

$$U = [(p-p_0)/p_0] \times 100$$

where p = wet (or fresh) weight of the wood and $p_0$= anhydrous weight of the wood.

It is also commonly known that the moisture of the wood depends on the temperature and the relative humidity of the environment in which it is located and that, even after a long period of natural seasoning or a drying cycle, the wood will always contain a percentage of water in dynamic equilibrium with the thermo-hygrometric conditions of the surrounding environment. In fact, wood kept in constant temperature and relative humidity conditions loses or acquires moisture, according to a characteristic curve, until it reaches a so-called equilibrium moisture content where the wood is in equilibrium with the surrounding environment.

The equilibrium moisture content of the wood in a normal climate (Index N), namely in an environment with an ambient temperature of 20°C and relative humidity of 65%, is referred to as the "normal moisture".

The normal moisture (Nm or also u659) is therefore a parameter of wood-like material and generally varies between 9% and 12%.

The equilibrium moisture content of construction wood according to the DIN (Deutsche Industrie Norm) standard 1052 lies generally within the following ranges:

- 12 to 24% for structures exposed to atmospheric conditions (use category 3)
- 10 to 20% for open structures provided with a roof (use category 2)
- 5 to 15% for closed and heated environments (use category 1)

Taking into account the above, it is preferable and advantageous that, when inserted in order to join together wooden elements, the plug should have a moisture content of not more than 9% so that it does not release moisture to the elements to be joined together (e.g. panels) and its diameter does not diminish, resulting therefore in less grip on the panel itself.

Preferably, when inserted, the plug should have a moisture content of not more than 6% so as to favour, once joining together has been performed, any absorption of moisture from the environment by the plug, this resulting in a better grip of the plug itself on the panel.

The moisture of the wood may be measured or estimated: using direct methods, which involve the measurement of the water mass contained in the sample and the mass of said sample in the anhydrous state or based on existing correlations between the wood moisture and other physical parameters (non-destructive methods).

The indirect methods instead allow measurement of the moisture without altering the structure of the article and have the major advantage that they may be repeated so that the moisture trend over time may be monitored.

The most widely known and used methods include: the direct gravimetric method (weighing method) and the indirect electrical and capacitive methods.

Recently the new ENs (European Standards) concerning determination of the moisture in wood have been adopted by the UNI (Italian National Standards Body):

UNI EN 13183-1 Moisture of a piece of sawn wood - Determination by means of the weighing method;
UNI EN 13183-2 Moisture of a piece of sawn wood - Estimation by means of the electrical method;
UNI EN 13183-3 Moisture of a piece of sawn wood - Part 3: Estimation by means of the capacitive method.

A preferred method for determining the moisture of a plug according to the invention is that of estimation by means of the electrical method.

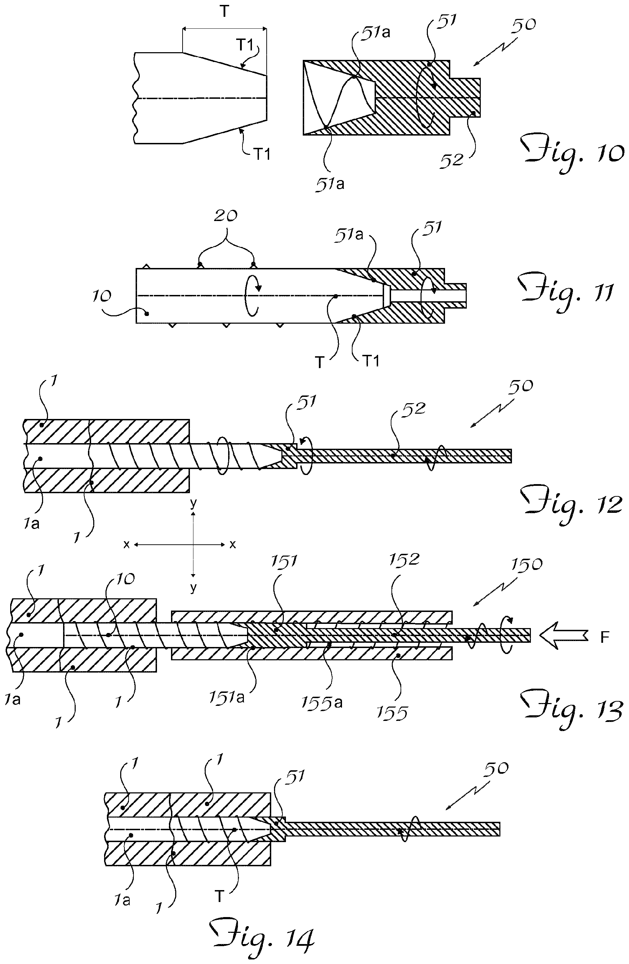

According to preferred embodiments and as shown it is envisaged that the plug has a head T with a frustoconical form (Fig. 10), with a diameter of the outwardly directed smaller base having dimensions smaller than the diameter D of the plug body and height suitable for engagement with a corresponding operating tool 50 which, as described further below, is designed to perform insertion of the whole plug - head included - inside a hole 1a of the panel 1.

Although the tip A of the plug is normally continuous and has a diameter the same as that of the plug body, it is also envisaged that said tip may have a frustoconical form with its smaller base directed outwards, in order to favour the insertion of the plug inside the panels to be fastened together.

According to the invention, the cylindrical body of the plug 10 has at least one thread 20 on its outer side surface, with a pitch P between adjacent threads with a size of between 30% and 300% of the diameter D of the plug body. As can be seen for example from Figures 1-3, between the opposite flanks of adjacent threads there is a bottom surface S of the thread which is formed by the outer side surface of the cylindrical body with diameter D and occupies most of the side surface provided with a threading (threaded surface) of the plug. Below and for the purposes of the present description this configuration will be referred to as a "long pitch" configuration.

Particularly preferred is the configuration where the pitch P is greater than or equal to the diameter D of the cylindrical body.

With reference to Figure 1, which shows the profile of a preferred plug according to the present invention, each raised thread has a substantially triangular cross-sectional form, with a pointed end able to bite into the wood of the panels to be joined together, and opposite lateral flanks of the thread which are inclined. Preferably, the height H1 of the thread with respect to the side surface of the cylindrical body which forms the bottom S between adjacent threads is comprised between 0.5 mm and 2 mm. Therefore, the outer diameter of the plug will be D+H1.

It is within the competence of the person skilled in the art, based on the teachings of the present description, to choose a suitable long pitch of the threading of the plug according to the invention, depending on the hardness and strength of the panel into which it is to be inserted, the length, hardness and strength of the plug to be inserted, the insertion method and the desired final characteristics of the assembled panel. Particularly preferred is a configuration where the raised threads occupy at the most one third, and even more preferably at the most one fifth, of the threaded surface of the plug.

Generally, it is preferable that the part of the threading which is raised with respect to the bottom surface S, namely with respect to the outer side surface of the cylindrical or frustoconical body of the plug, should occupy at the most 18% of the volume of the hollow cylinder (or truncated cone) having an outer diameter equal to the diameter D+2H1 of the plug body plus twice the height HI of the thread and inner diameter equal to the diameter D of the plug body. This volume of the threading is that which, once insertion has been performed, will be situated inside the wooden material of the hole wall.

Particularly advantageous examples of a long pitch are shown in Figures 1 to 9 and described in greater below. As shown for example in Figures 11 and 13, preferably the entire outer side surface of the cylindrical body 10 is provided with a threading 20, in which case the outer side surface and the threaded surface coincide. Preferably, the threading has a constant pitch over the whole of the threaded surface.

The angle $\alpha$ of the threading profile may be preferably between 40 and 50 degrees, and more preferably is about 45 degrees.

According to further embodiments, it is envisaged that the plug may have a multi-start threading designed to favour, in combination with the long pitch, a greater speed of insertion of the plug without penalizing the resistance to a pulling force since the multi-start threading results in the possibility of being able to increase twofold or threefold the length of the thread and therefore (in combination with the long pitch and/or thread height) the resistance to a pulling force, depending on the length of the plug.

In greater detail the following are envisaged:

- at least two different starting threads (Figs. 6,7);
- preferably three - or more - different starting threads (Figs, 8,9);

in both cases the direction of the threads will be the same, with the height and pitch defined in accordance with the different hardness of the panel 1 into which the plug is to be inserted and, in this case also, in accordance with the length, hardness and strength of the plug to be inserted, the insertion method and the desired final characteristics of the assembled panel.

With this configuration the insertion of the long-pitch plug according to the invention inside the hole 1a provided in the panel may be performed using three different methods:

- by means of simple screwing (Fig. 12);
- by means of screwing and axial pushing (Fig. 13);
- by means of axial pushing alone; in this case in fact the long pitch of the plug allows the plug to be inserted with a self-tapping screwing action into the hole of the panel;

Preferably it is also envisaged that:

• Plugs with a pitch in the range of 30%D≤P≤150%D are preferable in the case of insertion over small lengths/depths, where insertion may be performed only by means of screwing (twisting alone). In fact, the screwing force required tends to increase with the increase in the length of the plug;

• Plugs with a pitch in the range 150%D≤P≤300%D are particularly advantageous for insertion with pushing or a combination of screwing and pushing, said combination allowing the insertion with ease of longer plugs with a medium or long length;
• Plugs with a long pitch and with a multi-start threading are particularly advantageous when there is an increase in the length of the plug; the more the length and therefore the insertion depth of the plug increases the more insertion will require an axial pushing force and generally a longer pitch. The multi-start threading allows the length of the pitch to be maximized without excessively penalizing the gripping action. The multi-start threading also allows a greater speed of insertion.

According to a variation of embodiment of the plug according to the invention, it is envisaged that the plug has a body with a frustoconical form instead of a cylindrical form, so that the diameter of the plug body decreases progressively from a larger rear base, adjacent to the operating head of the plug, towards a smaller front base, situated opposite the tip of the tool. In this embodiment, the thread with a long pitch may be formed considering the diameter (D) of the large base of the frustoconical body, whereby all the comments and preferred embodiments described with regard to a cylindrical plug body are applicable here too.

The bottom surface of the threading, formed by the surfaces comprised between the opposite flanks of all the adjacent threads, will in this case be formed by the outer side surface of the frustoconical body. For insertion of the plug, the hole in the wooden element must also have a frustoconical form corresponding to that of the plug, this facilitating greatly insertion compared to a cylindrical plug, in particular in the case of long axial lengths.

A preferred example of the process for obtaining a plug according to the invention may comprise the following steps:

-- providing a piece of wood with a relative density >600kg/m$^3$, preferably hardwood, for example beech wood, extending with a greater dimension L along a longitudinal direction X-X and smaller dimension along a transverse direction Y-Y;
-- machining the piece of wood so as to obtain a substantially cylindrical or frustoconical body 10 with a greater longitudinal dimension L and diameter D and with at least one thread 20 which has a long pitch as described above.

Preferably, the plug thus formed may be subjected to a further treatment step so as to reduce its moisture to a value not higher than 9%, preferably not higher than 6%.

It is therefore clear how the threaded plug according to the invention is easy and inexpensive to produce and allows easy insertion in wooden elements such as panels, without having to provide a female/internal threading in the insertion hole, owing to a long pitch which results in a low insertion resistance, a self-tapping action in the wood of the insertion hole and a very high connection strength.

The plug according to the invention may also advantageously be treated before insertion so as to have at the time of insertion a moisture of less than 9% and preferably less than 6%, with the advantage of a smaller diameter which increases subsequently and favours optimum gripping of the plug.

With the preferred embodiments described, moreover, it is possible to avoid the need for subsequent trimming of the head once insertion has been completed and/or obtain an improved and stable tensile strength and/or resistance to fluctuations in temperature or environmental humidity.

The present invention relates furthermore to a method for connecting together wooden elements by means of at least one wooden plug, comprising the following steps:

a) providing wooden elements, for example panels 1, to be joined together;
b) forming, in said elements/panels, corresponding holes of given diameter for inserting inside each hole a corresponding element for joining them together;
c) providing connecting plugs 10 with a threading having a long pitch in accordance with the invention, preferably provided with a frustoconical head;
d) inserting each plug 10 inside the corresponding hole.

Optionally, a step is provided for treating the plug 10 so as to reduce its moisture content to a value not greater than 9%, preferably not greater than 6%. In this case, the insertion step is preferably performed with a time period designed to maintain the given moisture content of the plug.

According to preferred embodiments of the method it is envisaged that, in the case of panels made with forms and cross-sections such as form inside them cavities creating air chambers providing the panel with a certain elasticity, as for example described in EP 2,896,761 in the name of the present Applicant, the method comprises a further step of:

- pre-compression of the wooden element 1 prior to insertion of the connecting plug.

The insertion step may be performed by means of pushing, screwing or a combination of pushing and screwing, and preferably with the use of an insertion tool according to the methods indicated below.

According to the invention a wooden composite panel assembly is also envisaged, said assembly comprising a plurality of wooden elements 1 of predefined length which are joined together by means of mutual fastening means, wherein said fastening means comprise a wooden plug 10 with a long pitch and frustoconical head.

The present invention relates furthermore to a tool for inserting the plug 10 according to the present invention inside a hole 1a in a panel 1.

As described and illustrated above, the head T of the plug 10 has a preferably frustoconical form (Fig. 10) and correspondingly the operating tool 50 has a complementary head with a corresponding frustoconical form, situated axially opposite that of the head T, with internal dimensions of the head suitable for axial engagement with the head of the plug, and a threading 51a designed to bite into the head of the plug, engaging with it for transmission of twisting or axial pushing forces in accordance with either od the methods described above for inserting the plug inside the hole.

Preferably, the tool has a threading pitch which is between 20% and 100% of the diameter D of the plug and a height HI of the thread greater than or equal to 0.1 mm, preferably between 0.5 mm and 2 mm; the threading may also be of the multi-start type or have discontinuous sections.

It is envisaged that the axial length of the tool head is greater than the axial length of the plug head, so as to form an axial interspace between the plug head and the bottom of the tool head in order to avoid undesirable relative contact which could negatively affect the engagement of the thread with the plug head. Particularly preferred is a configuration where the diameter of the bottom of the tool head is smaller than the diameter of the plug head.

Preferably, the tool head has a diameter smaller than the diameter D of the plug.

The synergic interaction between tool and plug head is at a maximum when the plug and tool heads have a frustoconical form, so that a tensioning of the engaging force between tool and plug is obtained with an increase of the screwing force applied.

The complementary form of the tool head, in combination with an internal threading of the head itself, allows in fact the formation of a relative tool/plug connection with a very high gripping force which increases with an increase in the screwing force applied to the plug by means of the tool. The tool with internal threading inside the head does not require in fact any axial pressure in order to establish the connection with the plug; on the contrary, as soon as the threading engages with the head T of the wooden plug, it spontaneously bites into the wood of the said head, owing to the twisting force applied, without the need for additional pressure. As the twisting moment increases, the strength of the tool/plug connection also increases. On the other hand, the plug may be released rapidly and easily from the tool, by performing a reverse unscrewing rotation. Therefore, the tool/plug connection may withstand high forces, without the connection strength being affected. On the contrary, the greater the twisting moment the stronger the connection. Secondly there is no need for a counterthread on the plug head (because of the self-tapping action of the tool).

The Applicant has surprisingly established that the strength of the plug/tool connection is satisfactory even in the case of heights of the internal thread of the tool head equal to 0.1 mm, and even when the thread is almost completely worn. In addition to a high relative connection force between tool and plug, this force increasing with the screwing twisting action, the frustoconical head of the tool has the advantage of allowing the tool to remain engaged with the plug head and to apply a pushing force until the plug has been completely inserted inside the panel (Fig. 14), ensuring, once insertion has been completed, that the panel remains flat without the need for subsequent trimming operations.

According to preferred embodiments of the tool 100 it is envisaged that the tool may comprise:

-- an externally smooth or polygonal shank 52 (Fig. 12) and head 51 extending over a length in the axial direction x-x suitable for ensuring complete insertion of the plug head inside the holes 1a of the panels 1 to be joined together; the shank 52 may be provided with an open coaxial channel designed to allow insertion of a needle for pushing the plug head out of the tool head in the event of the plug breaking during insertion;

-- an externally smooth or polygonal shank 152 and head 151 provided with an external threading 151a (Fig. 13) suitable for engagement with the female thread 155a of a counter-tool 155 which can be coaxially mounted on the tool so that applying a pushing force on the shank causes the axial advancing movement of the tool+plug assembly inside the panel until fully inserted (Fig. 14).

Although not shown, it is envisaged that the axial pushing force to be exerted on the tool for insertion of the plug may be applied by means of controlled, hydraulic and/or electric aggregate means which are equivalent to and/or associated with the mechanical means shown in Fig. 12.

It is therefore clear how the plug and the method according to the invention enable easy, stable and low-cost joining together of wooden elements such as panels, without the need for holes having a preformed female thread and without negatively affecting subsequent machining of said panels with wood tools such as saws. The preferred tool, plug and connection method described enable insertion to be performed more easily while avoiding complex plug head cutting operations once the joining operation has been completed.

Although described in connection with a number of embodiments and a number of preferred examples of implementation of the invention, it is understood that the scope of protection of the present patent is determined solely by the claims below.

## Claims

1. Wooden plug having a rear operating head (T) and a cylindrical or frustoconical body (10) extending in a longitudinal direction (X-X) and a transverse direction (Y-Y), a threading (20) being formed on the outer side surface of the cylindrical or frustoconical body (10), the plug being made of wood with a relative density $\geq 600 \text{kg/m}^3$, preferably hardwood, wherein the threading (20) has a long pitch (P) of size comprised between 30% and 300% of the outer diameter (D) of the plug and such that the bottom surface of the threading comprised between opposite flanks of the adjacent threads is formed by the outer side surface of the cylindrical or frustoconical body (10) and occupies most of the threaded surface of the plug body.

2. Plug according to Claim 1, wherein it has an operating head (T) with a frustoconical form.

3. Plug according to Claim 1 or 2, wherein the threading (20) has a profile of the threads suitable for biting into the wood, in particular a substantially triangular profile, and/or in that the threading (20) has a height (H1) of the threads with respect to the side surface of the body (10) of the plug comprised between 0.5 mm and 2 mm.

4. Plug according to any one of Claims 1-3, wherein the raised threads occupy at the most one third, and even more preferably at the most one fifth, of the threaded surface of the plug, wherein preferably the threading part raised with respect to the bottom surface (S), namely with respect to the outer side surface of the cylindrical or frustoconical body of the plug, occupies at the most 18% of the volume of the hollow truncated cone or cylinder having an outer diameter equal to the diameter (D+2H1) of the plug body plus twice the height (H1) of the thread and an inner diameter equal to the diameter (D) of the plug body.

5. Plug according to any one of Claims 1 to 4, wherein it has multi-start threading.

6. Plug according to any one of Claims 1-5, wherein it has a threading with pitch (P) greater than or equal to the diameter (D) of the plug body and/or in that the pitch (P) is constant over the whole of the threaded surface of the plug.

7. Plug according to any one of Claims 1-6, wherein the threading (20) extends over the whole side surface of the plug body (10).

8. Composite wooden panel assembly comprising a plurality of wooden elements (1) of predefined hardness which are joined together by means of mutual fastening means, wherein said fastening means comprise a wooden plug (10) according to one of the preceding claims.

9. Method for the stable connection of wooden elements (1) of predefined hardness, comprising the steps of:

    - providing wooden elements/panels (1) to be joined together;
    - providing a connecting plug (10) according to one of Claims 1 to 7,
    - forming, in said panels (1), a corresponding hole (1a) with diameter and form corresponding to those of the plug, for insertion thereof;
    - inserting the plug (10) inside the corresponding hole (1a) provided.

10. Method according to Claim 9, wherein it comprises a step of precompression of the wooden element prior to the plug insertion step.

11. Method according to one of Claims 9 and 10, wherein the step of inserting the plug (10) is performed by means of screwing or axially pushing or screwing and axially pushing the said plug, while applying a corresponding force to the operating head of the plug.

12. Tool for inserting a plug (10) according to one of Claims 2 to 6 into a hole (1a) of a wooden element (1), comprising an operating head (51;151) with a frustoconical internal form, a diameter preferably smaller than the diameter D of the plug (10) and a threading (51a) inside the head designed to bite into the head of the plug for stable engagement therewith with a self-tapping action by means of screwing.

13. Tool according to Claim 12, wherein said internal thread of the head (50;150) has a pitch comprised between 20% and 100% of the diameter D of the plug and height of the thread greater than or equal to 0.1 mm, preferably comprised between 0.5 mm and 2 mm.

14. Tool according to Claim 12 or 13, wherein the axial length and form of the tool head is such as to form, once engagement has been performed, an axial interspace between the plug head and the bottom of the tool head.

15. Tool according to Claim 12, 13 or 14, wherein the diameter of the bottom of the tool head is smaller than the minimum diameter of the plug head so as to form, once engagement has been performed, an axial interspace between the plug head and the bottom of the tool head.

**16.** Tool according to Claim 12, 13 or 14, wherein it has an externally smooth or polygonal shank (52) and head (51) extending over a length in the axial direction (X-X) designed to ensure complete insertion of the head (T) of the plug inside the holes (1a) of the panels (1) to be joined together.

**Patentansprüche**

**1.** Holzzapfen mit einem hinteren Betätigungskopf (T) und einem zylindrischen oder kegelstumpfförmigen Körper (10), der sich in einer Längsrichtung (X-X) und einer Querrichtung (Y -Y) erstreckt, wobei ein Gewinde (20) an der äußeren Seitenfläche des zylindrischen oder kegelstumpfförmigen Körpers (10) ausgebildet ist, wobei der Zapfen aus Holz hergestellt ist mit einer relativen Dichte $\geq 600\,kg/m^3$, vorzugsweise Hartholz, wobei das Gewinde (20) eine lange Steigung (P) mit einer Größe zwischen 30% und 300% des äußeren Durchmessers (D) des Zapfens hat und derart, dass die Bodenfläche des Gewindes, die zwischen den gegenüberliegenden Flanken der benachbarten Gewinde liegt, von der äußeren Seitenfläche des zylindrischen oder kegelstumpfförmigen Körpers (10) gebildet wird und den größten Teil der Gewindefläche des Zapfenkörpers einnimmt.

**2.** Zapfen nach Anspruch 1, wobei er einen Betätigungskopf (T) mit einer kegelstumpfförmigen Form aufweist.

**3.** Zapfen nach Anspruch 1 oder 2, wobei das Gewinde (20) ein zum Einschneiden in das Holz geeignetes Profil der Gewindegänge, insbesondere ein im wesentlichen Dreiecksprofil, aufweist, und/oder dass das Gewinde (20) eine Höhe (H1) des Gewindes in Bezug auf die Seitenfläche des Körpers (10) des Zapfens aufweist, die zwischen 0,5 mm und 2 mm liegt.

**4.** Zapfen nach einem der Ansprüche 1-3, wobei die erhabenen Gewindegänge höchstens ein Drittel, und noch bevorzugter höchstens ein Fünftel der Gewindefläche des Zapfens einnehmen, wobei vorzugsweise der Gewindeteil gegenüber der Bodenfläche (S) erhöht ist, nämlich gegenüber der äußeren Seitenfläche des zylindrischen oder kegelstumpfförmigen Körpers des Zapfens, höchstens 18% des Volumens des hohlen Kegelstumpfes oder Zylinders mit einem äußeren Durchmesser gleich dem Durchmesser (D+2H1) des Zapfenkörpers plus der doppelten Höhe (H1) des Gewindes und einem Innendurchmesser, der gleich dem Durchmesser (D) des Zapfenkörpers entspricht.

**5.** Zapfen nach einem der Ansprüche 1 bis 4,

wobei er ein mehrgängiges Gewinde aufweist.

**6.** Zapfen nach einem der Ansprüche 1 bis 5, wobei er ein Gewinde mit einer Steigung (P) aufweist, die größer oder gleich dem Durchmesser (D) des Zapfenkörpers ist und/oder die Steigung (P) über die gesamte Gewindefläche des Zapfens konstant ist.

**7.** Zapfen nach einem der Ansprüche 1-6, wobei sich das Gewinde (20) sich über die gesamte Seitenfläche des Zapfenkörpers (10) erstreckt.

**8.** Zusammengesetzte Holzplattenanordnung, die eine Vielzahl von Holzelementen (1) mit vordefinierter Härte umfasst, die mittels gegenseitiger Befestigungsmittel verbunden sind, wobei die Befestigungsmittel einen Holzzapfen (10) nach einem der vorhergehenden Ansprüche umfassen.

**9.** Verfahren zum stabilen Verbinden von Holzelementen (1) mit vordefinierter Härte, umfassend die Schritte:

- Bereitstellen von miteinander zu verbindenden Holzelementen/Platten (1);
- Bereitstellen eines Verbindungszapfens (10) nach einem der Ansprüche 1 bis 7,
- Ausbilden eines entsprechenden Lochs (la) in den Platten (1) mit Durchmesser und Form, die denen des Zapfens entsprechen, zum Einsetzen desselben;
- Einsetzen des Zapfens (10) in das vorgesehene entsprechende Loch (la).

**10.** Verfahren nach Anspruch 9, wobei es einen Schritt der Vorkomprimierung des Holzelements vor dem Schritt des Einsetzens des Zapfens umfasst.

**11.** Verfahren nach einem der Ansprüche 9 und 10, wobei der Schritt des Einsetzen des Zapfens (10) durch Schrauben oder axiales Schieben oder Schrauben und axiales Schieben des Zapfens durchgeführt wird, während eine entsprechende Kraft auf den Betätigungskopf des Zapfens einwirkt.

**12.** Werkzeug zum Einsetzen eines Zapfens (10) nach einem der Ansprüche 1 bis 6 in ein Loch (la) eines Holzelements (1), umfassend einen Arbeitskopf (51; 151) mit einer kegelstumpfförmigen Innenform, einen Durchmesser vorzugsweise kleiner als der Durchmesser D des Zapfens (10) und ein Gewinde (51a) im Inneren des Kopfes, das so gestaltet ist, dass es sich in den Kopf des Zapfens einschneidet, zum stabilen Wechselwirken mit diesem mit einer selbstschneidenden Wirkung durch Verschrauben.

**13.** Werkzeug nach Anspruch 12, wobei das Innengewinde des Kopfes (50; 150) eine Steigung zwischen 20% und 100% des Durchmessers D des Zapfens und eine Höhe des Gewindes größer oder gleich 0,1 mm, vorzugsweise zwischen 0,5 mm und 2 mm aufweisend.

**14.** Werkzeug nach Anspruch 12 oder 13, wobei die axiale Länge und Form des Werkzeugkopfes derart ist, um nach dem Eingriff einen axialen Zwischenraum zwischen dem Zapfenkopf und dem Boden des Werkzeugkopfes zu bilden.

**15.** Werkzeug nach Anspruch 12, 13 oder 14, wobei der Durchmesser des Bodens des Werkzeugkopfes kleiner ist als der minimale Durchmesser des Zapfenkopfes, um nach erfolgtem Eingriff einen axialen Zwischenraum zwischen dem Zapfenkopf und dem Boden des Werkzeugkopfes zu bilden.

**16.** Werkzeug nach Anspruch 12, 13 oder 14, wobei es einen außen glatten oder polygonalen Schaft (52) und Kopf (51) aufweist, der sich über eine Länge in axialer Richtung (X-X) erstreckt, der dazu bestimmt ist, ein vollständiges Einführen des Kopfes (T) des Zapfens in die Löcher (la) der miteinander zu verbindenden Platten (1) zu gewährleisten.

**Revendications**

**1.** Bouchon en bois comportant une tête fonctionnelle arrière (T) et un corps cylindrique ou tronconique (10) s'étendant dans une direction longitudinale (X-X) et dans une direction transversale (Y-Y), un filetage (20) étant formé sur la surface du côté extérieur du corps cylindrique ou tronconique (10), le bouchon étant constitué de bois à une densité relative $\geq$ 600 kg/m$^3$, de préférence de bois dur, dans lequel le filetage (20) a un long pas (P) de taille s'inscrivant dans la plage de 30 % à 300 % du diamètre extérieur (D) du bouchon et tel que la surface de fond du filetage comprise entre des flancs opposés des filets adjacents est formée par la surface de côté extérieur du corps cylindrique ou tronconique (10) et occupe la majeure partie de la surface filetée du bouchon en bois.

**2.** Bouchon selon la revendication 1, dans lequel ledit bouchon comporte une tête fonctionnelle (T) de forme tronconique.

**3.** Bouchon selon la revendication 1 ou la revendication 2, dans lequel le filetage (20) a un profil des filets approprié pour mordre dans le bois, en particulier un profil sensiblement triangulaire, et/ou dans lequel le filetage (20) a une hauteur (H1) des filets par rapport à la surface latérale du corps (10) du bouchon s'inscrivant dans une plage de 0,5 mm à 2 mm.

**4.** Bouchon selon l'une quelconque des revendications 1 à 3, dans lequel les filets élevés occupent au plus un tiers, voire même plus idéalement au plus un cinquième de la surface filetée du bouchon, dans lequel, de préférence, la partie de filetage élevée par rapport à la surface de fond (S), à savoir par rapport à la surface du côté extérieur du corps cylindrique ou tronconique du bouchon, occupe au plus 18 % du volume du cône ou cylindre creux tronqué ayant un diamètre extérieur égal au diamètre (D + 2H1) du corps de bouchon plus deux fois la hauteur (H1) du filet et un diamètre intérieur égal au diamètre (D) du corps de bouchon.

**5.** Bouchon selon l'une quelconque des revendications 1 à 4, dans lequel ledit bouchon comporte un filetage à filets multiples.

**6.** Bouchon selon l'une quelconque des revendications 1 à 5, dans lequel ledit bouchon a un pas de largeur de filetage (P) supérieur ou égal au diamètre (D) du corps de bouchon et/ou dans lequel le pas (P) est constant sur la totalité de la surface filetée du bouchon.

**7.** Bouchon selon l'une quelconque des revendications 1 à 6, dans lequel le filetage (20) s'étend sur toute la surface latérale du corps de bouchon (10).

**8.** Ensemble de panneaux en bois composite comprenant une pluralité d'éléments en bois (1) de dureté prédéfinie qui sont reliés les uns aux autres à l'aide d'un moyen de fixation mutuelle, dans lequel ledit moyen de fixation comprend un bouchon en bois (10) selon l'une des revendications précédentes.

**9.** Procédé de montage stable d'éléments en bois (1) de dureté prédéfinie, comprenant les étapes consistant à :

- utiliser des éléments/panneaux en bois (1) à relier les uns aux autres ;
- utiliser un bouchon de montage (10) selon l'une des revendications 1 à 7,
- ménager, dans lesdits panneaux (1), un trou correspondant (la) ayant un diamètre et une forme correspondant à ceux du bouchon, à des fins de son introduction ;
- introduire le bouchon (10) dans le trou correspondant ménagé (la).

**10.** Procédé selon la revendication 9, dans lequel ledit procédé comprend une étape consistant à exécuter une compression préalable de l'élément en bois avant l'étape d'introduction de bouchon.

**11.** Procédé selon l'une ou l'autre des revendications 9 et 10, dans lequel l'étape d'introduction du bouchon (10) est exécutée à l'aide d'un vissage ou d'une poussée axiale ou d'un vissage et d'une poussée axiale dudit bouchon, tout en appliquant une force correspondante à la tête fonctionnelle du bouchon.

**12.** Outil d'introduction d'un bouchon (10) selon l'une des revendications 2 à 6 dans un trou (la) d'un élément en bois (1) comprenant une tête fonctionnelle (51 ; 151) ayant une forme interne tronconique, un diamètre idéalement inférieur au diamètre D du bouchon (10) et comportant un filetage (51a) à l'intérieur de la tête conçu pour mordre dans la tête du bouchon à des fins de prise stable avec ce dernier par une action d'auto-taraudage obtenue au moyen d'un vissage.

**13.** Outil selon la revendication 12, dans lequel ledit filet interne de la tête (50 ; 150) a un pas s'inscrivant dans une plage de 20 % à 100 % du diamètre D du bouchon et une hauteur du filet supérieure ou égale à 0,1 mm, s'inscrivant idéalement entre 0,5 mm et 2 mm.

**14.** Outil selon la revendication 12 ou 13, dans lequel la longueur axiale et la forme de la tête d'outil sont telles qu'elles forment, une fois la prise obtenue, un espace interstitiel axial entre la tête de bouchon et le fond de la tête d'outil.

**15.** Outil selon la revendication 12, 13 ou 14, dans lequel le diamètre du fond de la tête d'outil est inférieur au diamètre minimal de la tête de bouchon de façon à former, une fois la prise obtenue, un espace interstitiel axial entre la tête de bouchon et le fond de la tête d'outil.

**16.** Outil selon la revendication 12, 13 ou 14, dans lequel ledit outil comporte une tige extérieurement lisse ou polygonale (52) et la tête (51) s'étendant sur une longueur dans la direction axiale (X-X) est conçue pour garantir une introduction complète de la tête (T) du bouchon à l'intérieur des trous (la) des panneaux (1) à relier les uns aux autres.

*Fig. 1*

*Fig. 2*

*Fig. 3*

*Fig. 4*

*Fig. 5*

*Fig. 6*

*Fig. 7*

*Fig. 8*

*Fig. 9*

**Fig. 10**

**Fig. 11**

**Fig. 12**

**Fig. 13**

**Fig. 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2279839 A
- EP 2407265 A
- DE 102010031525
- US 9683593 B1
- EP 2896761 A